# EUROPEAN PATENT SPECIFICATION

(11) **EP 2 803 485 B1**
(45) Date of publication and mention of the grant of the patent: **25.05.2016**
(21) Application number: 14163830.4
(22) Date of filing: 08.04.2014
(51) Int. Cl.: B41F 33/00, B65H 29/04, G01N 21/89, G01J 3/02, G01J 3/00, G01J 3/28, G01N 21/88

(54) **Apparatus and method for acquiring multispectral images of one side of a printed sheet**
Vorrichtung und Verfahren zur Erfassung multispektraler Bilder einer Seite eines bedruckten Bogens
Appareil et procédé pour acquérir des images multispectrales d'un côté d'une feuille imprimée

(30) Priority: 13.05.2013 IT MI20130779
(43) Date of publication of application: 19.11.2014
(73) Proprietor: Parvis Systems and Services S.P.A., 37019 Peschiera del Garda, VR (IT)
(72) Inventor: De Toni, Giovanni, 20162 MILANO (IT); Salgari, Roberto, 20080 BASIGLIO MI (IT)
(74) Representative: Modiano, Micaela Nadia

(56) References cited:
- EP-A1- 1 197 331
- EP-A1- 2 138 437
- WO-A1-2005/115759

## Description

The present invention relates to an apparatus and a method for acquiring multispectral images of one side of a printed sheet. More specifically, the invention relates to an apparatus and a method that are capable of acquiring spectral images of a printed sheet, while ensuring the perfect flatness of the surface of the sheet during acquisition. EP 1 197 331 A1 discloses an apparatus according to the features of the preamble of claim 1.

As is known, in order to check the print quality of sheets, for example paper currency sheets on which banknotes are printed, a detailed analysis is required of the print quality, in order to ensure that the printed banknotes are totally free from defects.

These checks can be performed on a sample, i.e. by extracting one printed sheet from the print line.

The problem that arises in conducting a check of print quality is that it often happens that the printed sheet is not yet completely dry, in that the inks commonly used are slow-drying (for example chalcographic inks). In this case, techniques of analyzing the print quality which involve contact with the surface of the sheet that has just been printed are not practicable and thus are not normally used.

The aim of the present invention is to provide an apparatus and a method for acquiring multispectral images of one side of a printed sheet, in which the acquisition can occur without physical contact with the printed sheet.

Within this aim, an object of the present invention is to provide an apparatus and a method for acquiring multispectral images of one side of a printed sheet which makes it possible to acquire the images after printing, even immediately, when the printing inks are still fresh, without damaging the inked areas.

Another object of the present invention is to provide an apparatus and a method for acquiring multispectral images of one side of a printed sheet which makes it possible to ensure a perfect flatness of the surface of the sheet during image acquisition.

Another object of the present invention is to provide an apparatus and a method for acquiring images of one side of a printed sheet which are highly reliable, easily and practically implemented and low cost.

This aim and these and other objects which will become better apparent hereinafter are all achieved by an apparatus and a method for acquiring multispectral images of one side of a printed sheet according to claim 1 and 6.

Further characteristics and advantages of the invention will become better apparent from the description of a preferred, but not exclusive, embodiment of the apparatus and of the method according to the present invention, which is illustrated by way of non-limiting example in the accompanying drawings wherein:

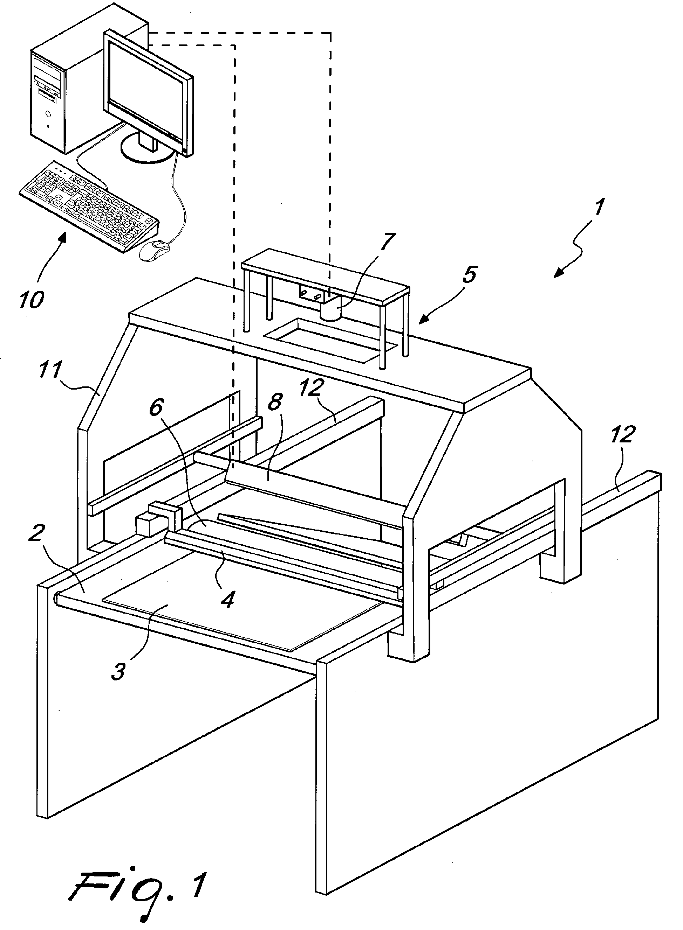

Figure 1 is a perspective view of the apparatus according to the present invention;

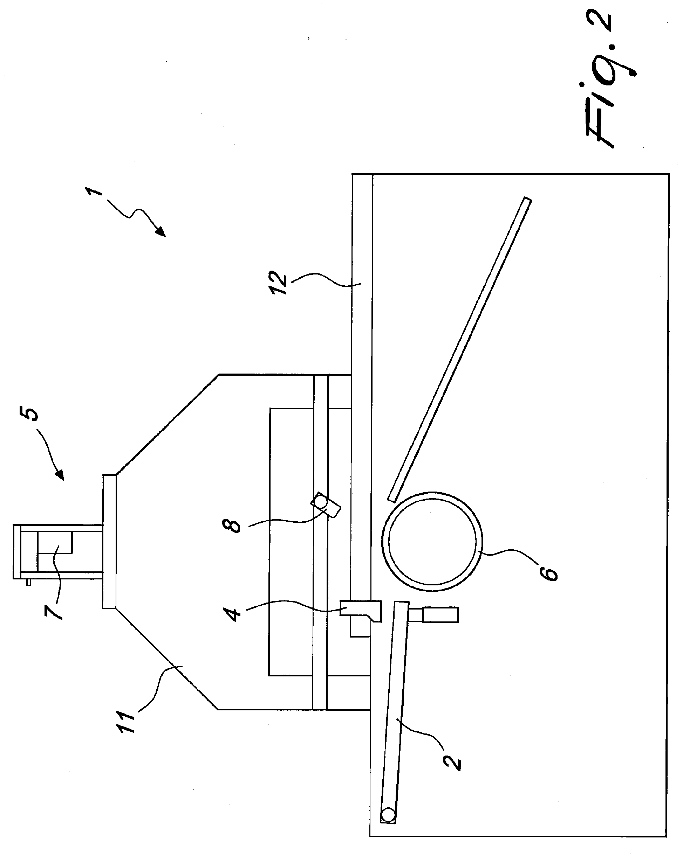

Figure 2 is a side view of the apparatus according to the invention in a first operating step;

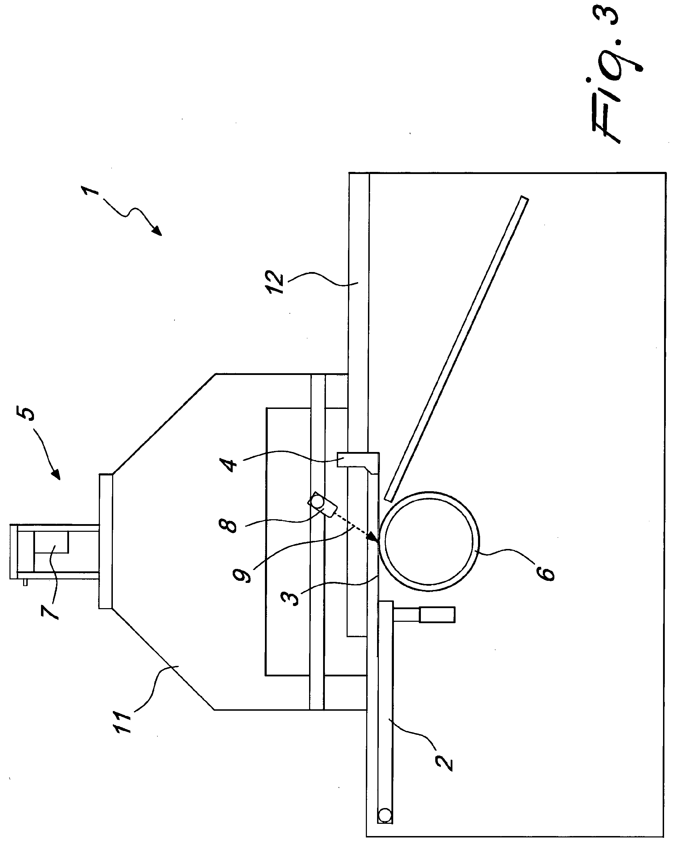

Figure 3 is a side view of the apparatus according to the invention in a second operating step;

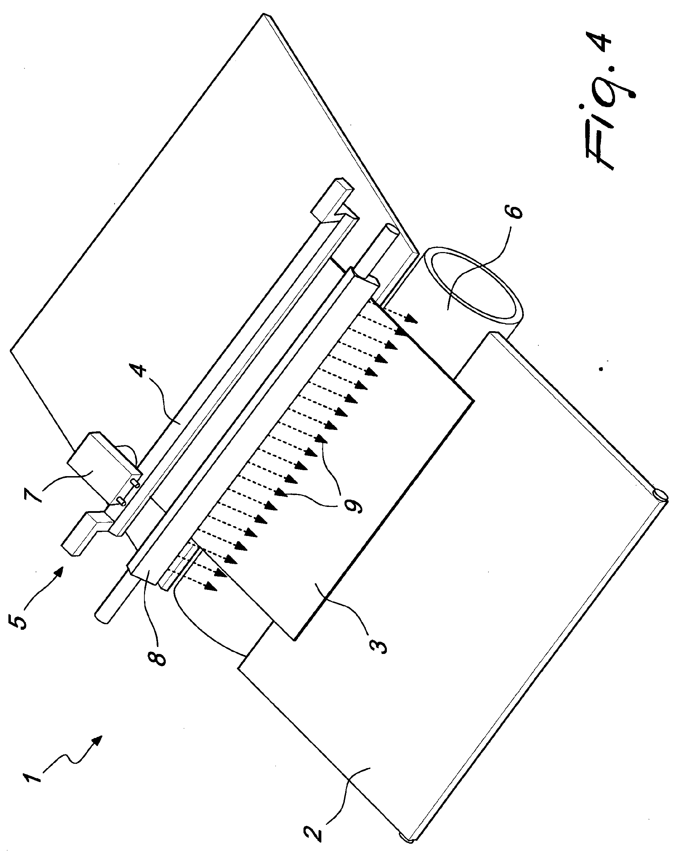

Figure 4 is a perspective view from above of a detail of the apparatus according to the invention.

With reference to the figures, the apparatus for acquiring images according to the invention, which is generally designated by the reference numeral 1, comprises a surface 2 on which a sheet 3 that is destined to be inspected for its print quality is adapted to be placed.

The surface 2 is moved from an inactive position to an active, raised position, in which the sheet 3 comes into contact, at one of its ends, with grip means 4, are provided with a suction that makes it possible to keep the end of the sheet 3 in contact with the grip means 4. The grip means 4 are thus adapted to enable the gripping of the sheet 3 and its entrainment to an image acquisition area.

The grip means 4 can move along a pair of motorized guides 12 that are arranged parallel and laterally to the surface 2.

Furthermore, a system 5 is provided for acquiring multispectral images, which is arranged above the surface 2 and the sheet 3, so that the acquisition system acquires the image that is present on the sheet 3.

The acquisition system 5 is supported by a frame 11 that is arranged in position above the surface 2 and the motorized guides 10.

In order to keep the sheet perfectly flat, thus preventing curling and hence the distortion of the acquired image, the sheet 3 passes over a cylinder 6, which is provided with a device capable of generating a vacuum. The vacuum is generated along a band of limited width (for example 10 mm) so as to force the flattening of the sheet 3 in this area, while allowing tensions/bubbles to be released to the external areas (before and after the acquisition area).

Conveniently, the cylinder 6 is constituted by a microperforated surface/tube, where, during the manufacturing step, it is possible to select different perforation patterns and hole sizes on the basis of the characteristics of the sheet 3 that is to be transported by the cylinder 6.

It is possible to vary the width of the suction area of the cylinder 6, so as to be able to adapt the extent of the suction to every size (format) of sheet 3.

Therefore, the apparatus according to the invention is capable of operating with sheets of mutually different formats.

Similarly to the cylinder 6, the grip means 4, constituted by a clamp, are also provided with a plurality of suction holes for gripping and immobilizing the sheet 3 at an edge thereof.

Therefore, the clamp 4 aspirates the sheet on the printed side, utilizing an area of limited width that does not impinge on the printing, so as to not damage the image printed on the sheet 3.

The lower surface of the clamp 4, i.e. the side of the clamp that is intended to come into contact with the end of the sheet 3, is preferably made with a material with a high friction coefficient, so as to be able to reduce the grip area to the minimum, while ensuring an adequate hold force that makes it possible for the grip clamp 4 to entrain the sheet 3 under the image acquisition area.

The multi spectral acquisition system 5 is constituted by at least one linear video camera 7, by a lighting system (light source) 8 that is adapted to direct a light beam 9 onto the sheet 3 to be subjected to image acquisition, and a computer 10.

Multispectral images can be obtained using a wide band light source 8 and a multilinear video camera 7 with different pigments for each line, or by way of a grayscale video camera and a lighting system with spectrum variable in a way that is known per se (such as for example a LED light source provided with LEDs of different wavelengths that are selectively selectable.

Operation of the apparatus according to the invention and thus the corresponding method are as follows.

Firstly the grip clamp 4 takes the sheet to be acquired 3, after raising the working surface 2 on which the sheet 3 is arranged, from an automatic feeder.

The clamp 4 thus overlaps the edge of the sheet 3 and aspirates the sheet, so as to make the sheet 3 adhere to the lower surface of the clamp 4.

No contact is made with the portion of sheet that impinges on the image to be acquired.

The clamp 4 then transports the sheet 3 so as to make it transit at the acquisition area, i.e. under the linear multispectral acquisition system 5.

While the sheet 3 transits at the acquisition area, it is aspirated by the cylinder 6 at the acquisition line of the image. The cylinder can remain stationary, it can be entrained by the sheet 3 in motion, or it can be in differential rotation with respect to the movement of the sheet 3, so that the relative speed between the movement of the sheet 3 and the cylinder 6 is constant but different from the linear speed of entrainment of the sheet (slower or faster as a function of the requirements).

The combined action of entrainment of the sheet 3 and suction by way of the cylinder 6 makes it possible to obtain the spreading out of the surface of the sheet 3 at the point of image acquisition, i.e. at the acquisition line determined by the light beam 9 that is projected on the sheet 3 whose image is to be acquired.

Acquisition of the image present on the sheet 3 occurs by way of a linear method. The video camera 7 acquires one line at a time synchronously with the movement of the sheet 3 and the image is thus reconstructed line by line in the memory of the computer 10. The synchronism is ensured by an encoder associated with the mechanism for feeding the sheet 3.

If the video camera is multilinear, then every line acquired already contains all the spectral planes. If the video camera is grayscale and the light source is multispectral, then acquisition of the various spectral components occurs in consecutive lines, continuously switching the spectral emission synchronously with the movement of the sheet 3 and with the acquisition of the video camera 7.

In substance, once acquisition of a line is complete, the emission of the lighting system is switched synchronously and the system proceeds with the acquisition of the subsequent line.

In this manner, consecutive lines are associated with the N different spectral components, and after N lines the system returns to the first spectral component.

Given that the lines are acquired with the sheets in motion, the lines do not correspond exactly to the same portion of sheet 3. The speed of movement of the sheet 3 is very low in comparison to the high frequency of switching the light of the light beam 9, and the frequency of acquisition of the lines, but there is still a slight skewing. This is corrected by the computer 10 using an image resampling algorithm.

The frequency of acquisition of the lines is N times the frequency necessary if using a multilinear video camera.

In practice it has been found that the apparatus and the method according to the present invention fully achieve the set aim and objects, in that they make it possible to acquire multispectral images of one side of a printed sheet, without physical contact with the sheet proper, thus making it possible to scan, and hence evaluate the image quality of, sheets with printing inks that are still fresh.

The apparatus according to the invention is capable of operating on sheets made of various different materials and can be applied to different printing techniques, including techniques that emboss the substrate such as, for example, the chalcographic process, which is typical of printing banknotes and other security documents.

The linear multispectral acquisition technique employed in the apparatus according to the invention makes it possible to obtain in a single acquisition step (i.e. simultaneously) images made up of multiple "planes", each corresponding to a different spectral band (for example, red, green, blue, yellow, infrared).

The simultaneous acquisition of different spectral lines ensures perfect alignment (overlappability of the images). In other words, each pixel of each spectral plane of the final image represents (corresponds to) the same portion of the printed sheet, making it possible to carry out complex and detailed quality checks.

## Claims

1. An apparatus (1) for acquiring multispectral images of one side of a printed sheet (3), comprising a supporting surface (2) adapted to allow the placement of said printed sheet (3) whose printed image is to be acquired, a suction cylinder (6) adapted to aspirate, contactless, the printed sheet (3) that is made to pass thereon, grip means (4) adapted to capture and immobilize one end of the printed sheet (3) without making contact with the image to be acquired, and a linear multispectral image acquisition system (5) arranged above said suction cylinder (6), whereby said grip means (4) comprise a grip clamp **characterized in that** said grip clamp is provided with a suction system, and said surface (2) for supporting said printed sheet (3) is adapted to pass from an inactive position to an active, raised position, in order to allow the grip means (4) to aspirate and thus grip and immobilize the end of said printed sheet (3).

2. The apparatus according to claim 1, **characterized in that** the suction of said suction cylinder (6) is provided at an acquisition line defined by a light beam (9) that is emitted by said linear multispectral acquisition system (5) and is incident on said printed sheet (3).

3. The apparatus according to one or more of the preceding claims, **characterized in that** said linear multispectral image acquisition system (5) comprises at least one video camera (7), a light source (8) and a computer (10), said light source (8) being adapted to emit said light beam (9) that is incident on said printed sheet (3).

4. The apparatus according to one or more of the preceding claims, **characterized in that** said grip means (4) are adapted to pass from an initial position of gripping said printed sheet (3) to a final position in which said printed sheet (3) is entrained under said linear multispectral acquisition system (5).

5. The apparatus according to one or more of the preceding claims, **characterized in that** said grip means (4) act by suction on said printed sheet (3) at an edge of said printed sheet (3) that is not affected by printing.

6. A method for acquiring images of one side of a printed sheet (3), comprises the following steps:
- picking up, by suction grip means (4), a printed sheet (3) from which printed images are to be acquired from a surface (2) for supporting said printed sheet (3) being adapted to pass from an inactive position to an active, raised position, in order to allow the grip means (4) to aspirate and thus grip and immobilize the end of said printed sheet (3);
- conveying said printed sheet (3) so as to make it perform a translational motion at an image acquisition area, under a linear multispectral image acquisition system (5);
- at the image acquisition area, aspirating contactless said printed sheet (3) by way of a perforated suction cylinder (6);
- acquiring the image that is present on said printed sheet (3) with said linear multispectral image acquisition system (5).

7. The method according to claim 6, **characterized in that** said multispectral images are obtained by using a wide band light source (8) and a multilinear video camera (7) with different pigments for each line.

8. The method according to claim 6 or 4, **characterized in that** said multispectral images are obtained by way of a grayscale video camera (7) and a lighting system with discretely variable spectrum.

## Patentansprüche

1. Eine Vorrichtung (1) zur Erfassung multispektraler Bilder einer Seite eines bedruckten Bogens (3), die eine tragende Oberfläche (2) umfasst, ausgebildet, um die Positionierung des bedruckten Bogens (3) zu ermöglichen, dessen gedrucktes Bild erfasst werden soll, einen Saugzylinder (6), ausgebildet, um berührungslos den bedruckten Bogen (3), der darauf zum Durchlaufen gebracht wird, anzusaugen, Greifmittel (4), ausgebildet, um ein Ende des bedruckten Bogens (3) zu erfassen und zu immobilisieren, ohne das zu erfassende Bild zu berühren, und ein lineares multispektrales Bildaufnahmesystem (5), angeordnet oberhalb des Saugzylinders (6), wodurch die Greifmittel (4) eine Greifklemme umfassen, **dadurch gekennzeichnet, dass** die Greifklemme mit einem Saugsystem ausgestattet ist und die Oberfläche (2) zum Tragen des bedruckten Bogens (3) ausgebildet ist, um aus einer inaktiven Position in eine aktive, erhöhte Position überzugehen, um es den Greifmitteln (4) zu ermöglichen, das Ende des bedruckten Bogens (3) anzusaugen und so zu greifen und zu ruhig zu stellen:

2. Die Vorrichtung gemäß Anspruch 1, **dadurch gekennzeichnet, dass** die Saugwirkung des Saugzylinders (6) an einer Erfassungslinie bereitgestellt ist, die durch einen Lichtstrahl (9) bestimmt ist, welcher von dem linearen multispektralen Bildaufnahmesystem (5) ausgestrahlt wird und auf den bedruckten Bogen (3) auftrifft.

3. Die Vorrichtung gemäß einem oder mehreren der obigen Ansprüche, **dadurch gekennzeichnet, dass** das lineare multispektrale Bildaufnahmesystem (5) mindestens eine Videokamera (7), eine Lichtquelle (8) und einen Computer (10) umfasst, wobei die Lichtquelle (8) ausgebildet ist, um den Lichtstrahl (9) zu emittieren, der auf dem bedruckten Bogen (3) auftrifft.

4. Die Vorrichtung gemäß einem oder mehreren der obigen Ansprüche, **dadurch gekennzeichnet, dass** die Greifmittel (4) ausgebildet sind, um aus einer Ausgangsposition des Greifens des bedruckten Bogens in eine Endposition überzugehen, in welcher der bedruckte Bogen unter dem linearen multispektralen Aufnahmesystem (5) mitgezogen wird.

5. Die Vorrichtung gemäß einem oder mehreren der obigen Ansprüche, **dadurch gekennzeichnet, dass** die Greifmittel (4) durch Saugwirkung auf den bedruckten Bogen (3) an einer Kante des bedruckten Bogens (3) einwirken, die nicht vom Druckvorgang beeinflusst ist.

6. Ein Verfahren zur Erfassung von Bildern einer Seite eines bedruckten Bogens (3) umfasst folgende Schritte:
- Aufnehmen durch Sauggreifmittel (4) eines bedruckten Bogens (3), von dem gedruckte Bilder aufgenommen werden sollen, von einer Oberfläche (2) zum Tragen des bedruckten Bogens (3), ausgebildet, um aus einer inaktiven Position in eine aktive, erhöhte Position überzugehen, um es den Greifmitteln (4) zu ermöglichten, das Ende des bedruckten Bogens (3) anzusaugen und so zu greifen und es zu immobilisieren;
- Weiterleiten des bedruckten Bogens (3), um ihn in einem Bilderfassungsbereich unter einem linearen multispektralen Bildaufnahmesystem (5) eine Translationsbewegung durchführen zu lassen;
- im Bilderfassungsbereich, berührungsloses Ansaugen des bedruckten Bogens mit Hilfe eines perforierten Saugzylinders (6);
- Erfassen des Bildes mit dem linearen multispektralen Bildaufnahmesystem (5), das sich auf dem bedruckten Bogen (3) befindet.

7. Das Verfahren gemäß Anspruch 6, **dadurch gekennzeichnet, dass** die multispektralen Bilder mit Hilfe einer Breitband-Lichtquelle (8) und einer multilinearen Videokamera (7) mit verschiedenen Pigmenten für jede Zeile aufgenommen werden.

8. Das Verfahren gemäß Anspruch 6 oder 7, **dadurch gekennzeichnet, dass** die multispektralen Bilder mit Hilfe einer Grau-Skala-Videokamera (7) und eines Beleuchtungssystems mit diskret variablem Spektrum aufgenommen werden.

## Revendications

1. Appareil (1) pour acquérir des images multispectrales d'un côté d'une feuille imprimée (3), comprenant une surface de support (2) adaptée de façon à permettre le placement de ladite feuille imprimée (3) dont l'image imprimée doit être acquise, un cylindre d'aspiration (6) configuré pour aspirer, sans contact, la feuille imprimée (3) qui est amenée à passer sur celui-ci, des moyens de saisie (4) configurés pour capturer et immobiliser une extrémité de la feuille imprimée (3) sans venir en contact avec l'image à acquérir, et un système d'acquisition d'image multispectrale linéaire (5) disposé au-dessus dudit cylindre d'aspiration (6), grâce à quoi lesdits moyens de saisie (4) comprennent une pince de saisie, **caractérisé en ce que** ladite pince de saisie est munie d'un système d'aspiration, et **en ce que** ladite surface (2) pour supporter ladite feuille imprimée (3) est configurée pour passer d'une position inactive à une position élevée, active, de façon à permettre aux moyens de saisie (4) d'aspirer, et ainsi de saisir et d'immobiliser l'extrémité de ladite feuille imprimée (3).

2. Appareil selon la revendication 1, **caractérisé en ce que** l'aspiration dudit cylindre d'aspiration (6) est prévue au niveau d'une ligne d'acquisition définie par un faisceau de lumière (9) qui est émis par ledit système d'acquisition multispectral linéaire (5) et qui est incident sur ladite feuille imprimée (3).

3. Appareil selon l'une ou plusieurs des revendications précédentes, **caractérisé en ce que** ledit système d'acquisition d'image multispectrale linéaire (5) comprend au moins une caméra vidéo (7), une source de lumière (8) et un ordinateur (10), ladite source de lumière (8) étant adaptée de façon à émettre ledit faisceau de lumière (9) qui est incident sur ladite feuille imprimée (3).

4. Appareil selon l'une ou plusieurs des revendications précédentes, **caractérisé en ce que** lesdits moyens de saisie (4) sont configurés pour passer d'une position de saisie initiale de ladite feuille imprimée (3) à une position finale, dans laquelle ladite feuille imprimée (3) est entraînée sous ledit système d'acquisition multispectral linéaire (5).

5. Appareil selon l'une ou plusieurs des revendications précédentes, **caractérisé en ce que** lesdits moyens de saisie (4) agissent par aspiration sur ladite feuille imprimée (3) au niveau d'un bord de ladite feuille imprimée (3) qui n'est pas affecté par l'impression.

6. Procédé pour acquérir des images d'un côté d'une feuille imprimée (3), qui comprend les étapes suivantes :
- la saisie, par des moyens de saisie par aspiration (4), d'une feuille imprimée (3) à partir de laquelle des images imprimées sont à acquérir à partir d'une surface (2) pour supporter ladite feuille imprimée (3) configurée pour passer d'une position inactive à une position élevée, active, de façon à permettre aux moyens de saisie (4) d'aspirer, et ainsi de saisir et d'immobiliser l'extrémité de ladite feuille imprimée (3) ;
- le convoyage de ladite feuille imprimée (3) de façon à lui faire effectuer un mouvement de translation au niveau d'une zone d'acquisition d'image, sous un système d'acquisition d'image multispectrale linéaire (5) ;
- au niveau de la zone d'acquisition d'image, l'aspiration sans contact de ladite feuille imprimée (3) à l'aide d'un cylindre d'aspiration perforé (6) ;
- l'acquisition de l'image qui est présente sur ladite feuille imprimée (3) avec ledit système d'acquisition d'image multispectrale linéaire (5).

7. Procédé selon la revendication 6, **caractérisé en ce que** lesdites images multispectrales sont obtenues en utilisant une source de lumière à large bande (8) et une caméra vidéo multilinéaire (7) avec des pigments différents pour chaque ligne.

8. Procédé selon la revendication 6 ou 7, **caractérisé en ce que** lesdites images multispectrales sont obtenues à l'aide d'une caméra vidéo à échelle de gris (7) et d'un système d'éclairage avec un spectre variable de façon discrète.
